# EUROPÄISCHE PATENTSCHRIFT

(11) **EP 3 160 891 B1**
(45) Veröffentlichungstag und Bekanntmachung des Hinweises auf die Patenterteilung: **17.11.2021**
(21) Anmeldenummer: 15739527.8
(22) Anmeldetag: 24.06.2015
(51) Int. Cl.: B66C 15/04, B66C 23/78, E04G 21/04

(54) **FAHRBARER GROSSMANIPULATOR**
MOBILE LARGE MANIPULATOR
MANIPULATEUR DE GRANDE TAILLE, MOBILE

(30) Priorität: 25.06.2014 DE 102014009165
(43) Veröffentlichungstag der Anmeldung: 03.05.2017
(73) Patentinhaber: Schwing GmbH, 44653 Herne (DE)
(72) Erfinder: VIERKOTTEN, Reiner, 46145 Oberhausen (DE); SCHNITTKER, Joseph, 44227 Dortmund (DE)
(74) Vertreter: Schneiders, Josef
(86) Internationale Anmeldenummer: PCT/EP2015/064281
(87) Internationale Veröffentlichungsnummer: WO 2015/197708

(56) Entgegenhaltungen:
- EP-A1- 1 356 910
- EP-B1- 2 038 493

## Beschreibung

Die Erfindung betrifft einen fahrbaren Großmanipulator sowie ein Verfahren zur programmgesteuerten Unterstützung der Positionierung eines Großmanipulators.

Großmanipulatoren sind aus dem Stand der Technik (siehe z.B. EP 2 038 493 B1) bekannt. Sie umfassen insbesondere ein Fahrgestell, zwei vordere und zwei hintere auf einem Untergrund über ausfahrbare Stützbeine abstützbare Stützausleger, die am Fahrgestell angeordnet sind und von einer Fahrstellung in eine Abstützstellung ganz oder teilweise ausfahrbar sind, und einen ausfaltbaren Mastarm, der einen um eine Hochachse drehbaren Drehschemel und eine Mehrzahl von gelenkig miteinander verbundenen Mastsegmenten aufweist.

Bei voll ausgefahrenen und abgestützten Stützauslegern ist üblicherweise eine Drehung des voll ausgeklappten Mastarms um 360° möglich. Es lässt sich somit insgesamt ein kreisförmiger Bereich um den Großmanipulator mit dem Mastarm erreichen, ohne dass die Gefahr des Kippens des Großmanipulators besteht. Je nach Länge des Auslegers kann so Dickstoff in einem Radius von 70 Metern und mehr ausgebracht werden. Allerdings ist es häufig der Fall, dass die Stützausleger nicht komplett ausgefahren werden können, da die Einsatzorte der Großmanipulatoren vielfach zu schmal sind. Es befinden sich beispielsweise Hindernisse am Einsatzort oder der Boden weist keine ausreichende Befestigung zum Abstützen der Maschine auf. In diesen Fällen kann nur eine Teilabstützung des Großmanipulators erfolgen. Hier können dann beispielsweise lediglich die vorderen, die seitlichen oder drei der vier Stützausleger vollständig ausgefahren und abgestützt werden. Die anderen Stützausleger werden nur in eine verkürzte Ausfahrstellung ausgefahren oder verbleiben sogar komplett in ihrer eingeklappten Stellung. Hierdurch ergibt sich insgesamt ein eingeschränkter Arbeitsbereich des Mastes. Wird dieser Arbeitsbereich des Mastes überschritten, dann besteht die Gefahr, dass der Großmanipulator umkippt. Je nach verwendeter Abstützkonfiguration ergeben sich verschiedene Schwenkbereiche des Mastes, in denen sich der Mast befinden kann, ohne dass die Autobetonpumpe umkippt.

Aus der EP 1 356 910 A1 ist ein Großmanipulator bekannt, der über eine Stabilitätsüberwachung verfügt. Hier wird die Abstützkonfiguration anhand der Ausfahrpositionen der einzelnen Stützen sensorisch erfasst. Anhand der Abstützkonfiguration wird ein zulässiger Arbeitsbereich festgelegt, in dem der Großmanipulator nicht umkippt. Nachteilig an dieser Stabilitätsüberwachung hierbei ist jedoch, dass die Mastfunktionen erst eingeschränkt und blockiert werden, wenn der Mast eine Stellung erreicht, bei welcher der Großmanipulator umzukippen droht. Hierdurch kann nicht sichergestellt werden, dass von der gewählten Aufstellposition des Großmanipulators die gewünschte Betonierstelle auch sicher angefahren werden kann.

Für den Maschinisten stellt sich beim Anfahren einer Betonierstelle immer wieder das Problem, eine geeignete Aufstellposition des Großmanipulators zu finden, so dass die zu betonierende Fläche möglichst optimal mit dem Mastarm erreicht werden kann. Eine geeignete Aufstellposition lässt sich sehr schwer abschätzen. Hierzu bedarf es einer großen Erfahrung des Maschinisten sowie guter Kenntnisse der Umgebung, wie beispielsweise Informationen über die Bodenbeschaffenheit. Dies wird noch weiter erschwert, wenn der Drehwinkel bzw. der Schwenkbereich des Mastarms bei Teilabstützung eingeschränkt ist. Häufig sind daher zeitaufwändige Neupositionierungen der Maschinen notwendig, oder der Beton muss auf andere Art und Weise von den Arbeitern auf der Baustelle zum Ausbringungsort gebracht werden. Durch die entstehenden Verzögerungen kann eine ideale Betonierung nicht gewährleistet werden, da die Gefahr besteht, dass der Beton aushärtet und es unter Umständen zu Stopfern in der Betonpumpe kommt.

Die Positionierung der aus dem Stand der Technik bekannten Großmanipulatoren erfolgt aufgrund der Erfahrung des Maschinisten, der höchstens noch auf Diagramme zurückgreifen kann, in denen die möglichen Drehwinkel des Knickmastes bei verschiedenen Abstützvarianten graphisch dargestellt sind. Der Maschinist positioniert die Maschine an der abgeschätzten Position und stützt diese dort ab. Nachteilig an den bekannten Großmanipulatoren ist, dass hierdurch eine geeignete Aufstellposition, mit der die zu betonierende Fläche optimal mit dem Mastarm erreicht wird, nur geschätzt werden kann. Ein optimaler Aufstellort wird daher selten beim ersten Anlauf gefunden, so dass es wenigstens einer zeitaufwändigen Neupositionierung bedarf.

Es ist somit Aufgabe der Erfindung, einen fahrbaren Großmanipulator bereitzustellen, der es dem Maschinist ermöglicht, einen optimalen Aufstellort zu finden, so dass der Großmanipulator mit einer an der Betonierstelle ausführbaren Abstützkonfiguration die zu betonierende Fläche möglichst optimal bzw. komplett erreichen kann.

Gelöst wird diese Aufgabe durch einen Großmanipulator mit den Merkmalen des Anspruchs 1 sowie ein Verfahren mit den Merkmalen des Anspruchs 15. Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Ein erfindungsgemäßer fahrbarer Großmanipulator weist ein Fahrgestell, zwei vordere und zwei hintere, auf einem Untergrund über ausfahrbare Stützbeine abstützbare Stützausleger, die jeweils am Fahrgestell angeordnet und von einer Fahrstellung in eine Abstützstellung ganz oder teilweise ausfahrbar sind, und einen ausfaltbaren Mastarm auf, der einen am Fahrgestell um eine Hochachse drehbar angeordneten Drehschemel und eine Mehrzahl von gelenkig miteinander verbundenen Mastsegmenten aufweist. Der Arbeitsbereich des Mastarmes, d.h. der mit der Spitze des Mastarmes erreichbare Bereich, ist von der Abstützkonfiguration der Stützausleger abhängig. Der Bediener des Großmanipulators kann z.B. aus einer Mehrzahl von möglichen Abstützkonfigurationen wählen, die jeweils die Abstützstellungen der Stützausleger vorgeben. Der erfindungsgemäße Großmanipulator zeichnet sich durch eine programmgesteuerte Positionierungshilfe aus, die zur Ausgabe einer graphischen Darstellung von Umgebungsbilddaten auf einem Bildschirm eingerichtet ist, wobei der Arbeitsbereich des Mastarmes in der graphischen Darstellung visualisiert wird.

Durch den erfindungsgemäßen Großmanipulator wird eine graphische Darstellung der Baustelle und der Umgebung mit der Position des Großmanipulators und dem von diesem bei einer bestimmten Abstützkonfiguration abgedeckten Arbeitsbereich angezeigt, und zwar bevorzugt noch bevor der Maschinist die Maschine endgültig aufstellt und die Stützausleger ausfährt.

Dabei kann der Bediener des Großmanipulators beispielsweise verschiedene Abstützkonfigurationen ausprobieren, in dem er diese eingibt und die Überdeckung des sich bei der jeweiligen Abstützkonfiguration ergebenden Arbeitsbereiches mit z.B. einer zu erreichenden Betonierstelle überprüft. Erst wenn die geeignete Positionierung und Abstützkonfiguration gefunden ist, fährt der Bediener die Stützenausleger entsprechend der gewählten Abstützkonfiguration aus.

Alternativ kann der Bediener beispielweise einen gewünschten Arbeitsbereich des Mastarmes vorgeben, woraus sich eine Abstützkonfiguration des Großmanipulators ergibt, die auch auf dem Bildschirm dargestellt werden kann. So kann der Bediener feststellen, ob an dem geplanten Aufstellort des Großmanipulators mit der notwendigen Abstützkonfiguration, z.B, bei beengten Platzverhältnissen, der Arbeitsbereich von dem Mastarm überhaupt abgedeckt werden kann.

Die Erfindung weist somit gegenüber dem Stand der Technik den Vorteil auf, dass der Maschinist schon vor dem endgültigen Abstellen und Abstützen des Großmanipulators sehen kann, ob er bei seinem ausgewählten Abstellort und bei der von ihm gewählten Abstützkonfiguration den Zielbereich, insbesondere alle Betonierpunkte auf der Baustelle, erreichen kann oder ob er den Großmanipulator an einer anderen Position mit beispielsweise einer anderen Abstützkonfiguration aufstellen muss bzw. sollte, um den Zielbereich besser oder vollständig erreichen zu können. Durch die Erfindung kann eine zeitaufwändige Neupositionierung des Großmanipulators vermieden werden. Insgesamt kann somit eine bestmögliche Betonierung sichergestellt werden.

Die Visualisierung der Umgebung ermöglicht es dem Maschinisten zudem, einen optimalen Rundumblick von der Baustelle zu erhalten. Hierzu kann die Positionierungshilfe in der Weise eingerichtet sein, dass zur Visualisierung des Arbeitsbereiches eine graphische Darstellung des Arbeitsbereiches mit der graphischen Darstellung der Umgebung des fahrbaren Großmanipulators überlagert wird. Die graphische Darstellung der Umgebungsbilddaten kann vorteilhaft so erfolgen, dass auf dem Bildschirm der Großmanipulator von oben, d.h. gleichsam aus der Vogelperspektive, zusammen mit seiner Umgebung lagerichtig, d.h. in korrekter relativer räumlicher Anordnung und möglichst auch in realitätsgetreuen Größenverhältnissen, zu sehen ist. Hierdurch ist es für den Maschinisten leichter zu erkennen, ob beim Aufstellen z.B. einer Autobetonpumpe auch ein ausreichend großer Freiraum für einen Fahrmischer bleibt bzw. vorhanden ist.

Die graphische Darstellung der Umgebung kann auf unterschiedliche Art und Weise erfolgen. Bevorzugt weist der Großmanipulator wenigstens eine Kamera auf, die die Umgebungsbilddaten aufnimmt. Die Positionierungshilfe ist derart eingerichtet, dass sie die Umgebungsbilddaten verarbeitet, z.B. um sie entsprechend der gewünschten Darstellungsperspektive umzurechnen, und auf dem Bildschirm ausgibt.

Vorteilhafterweise ist die wenigstens eine Kamera am Drehschemel angeordnet. Der Drehschemel stellt den Mittelpunkt des Mastarms und damit auch den Mittelpunkt des Arbeitsbereichs dar. Es können auch zwei Kameras am Drehschemel angeordnet sein. Diese sind dann bevorzugt seitlich an der rechten und linken Seite des Drehschemels angeordnet.

Ein erfindungsgemäßer Großmanipulator weist bevorzugt an allen vier Seiten wenigstens eine Kamera auf. Vorteilhafterweise ist je eine Kamera vorne, hinten, seitlich links und seitlich rechts am Großmanipulator angeordnet. Idealerweise können die Aufnahmen der Kameras rechnertechnisch überlagert werden, so dass eine 360°-Rundumsicht um das Fahrzeug erhalten wird. Die Kameras können am Fahrgestell bzw. am Führerhaus des Großmanipulators angeordnet sein. Hierdurch können die Kameras einfach mit einer zentralen Steuereinheit kabelgebunden oder kabellos verbunden werden. Eine gewisse Einschränkung ist dabei, dass durch die niedrige Anordnung am Großmanipulator die Kameras nur einen relativ kleinen Bereich der Umgebung anzeigen können.

Um die Reichweite der Kameras zu verbessern, kann auch wenigstens eine Kamera am Mastarm angeordnet sein. Durch die verbesserte Reichweite erhält der Maschinist eine bessere Übersicht der Baustelle. Dies ist insbesondere dahingehend wichtig, dass durch die immer größer werdenden Großmanipulatoren auch der Austragungsbereich immer weiter wächst und der Maschinist diesen vollständig erfassen muss, damit eine optimale Ausrichtung des Großmanipulators auf der Baustelle möglich ist. Um auf eine aufwändige Verkabelung der Kameras verzichten zu können, sind die Kameras bevorzugt über eine Funkverbindung mit der Positionierungshilfe verbunden.

Idealerweise ist wenigstens eine Kamera möglichst hoch oben am Großmanipulator angeordnet. Die Kamera kann an einem nach oben ausfahrbaren oder ausschwenkbaren Kameraausleger, der bevorzugt am Drehschemel angeordnet ist, angeordnet sein. Je nach Gegebenheit kann der Kameraausleger dann entsprechend weit nach oben ausgefahren bzw. ausgeschwenkt werden.

Der erfindungsgemäße Großmanipulator kann eine Kamera mit 360° Rundumsicht aufweisen. Vorteilhaft hierbei ist, dass eine aufwendige rechnertechnische Überlagerung von Aufnahmen verschiedener Kameras entfallen kann. Der Maschinist erhält eine stetige Darstellung der Baustellenumgebung. Die beste Darstellung wird erreicht, wenn die Kamera mit 360° Rundumsicht an einem möglichst hohen Punkt am Großmanipulator angelenkt ist.

Denkbar ist auch, dass die Kamera an einem unbemannten Luftfahrzeug, beispielsweise einer Drohne, angeordnet ist, die von dem Bediener steuerbar ist. Die Kamera kommuniziert idealerweise mit der Positionierungshilfe zur Übertragung der Umgebungsbilddaten drahtlos. Sie kann die Aufnahmen über Funk an die Positionierungshilfe übertragen. Hierdurch lässt sich eine besonders gute Darstellung der Umgebung erreichen. Die Kamera ist bevorzugt an der Unterseite des Luftfahrzeugs angeordnet. Das Luftfahrzeug wird von dem Großmanipulator oder neben dem Großmanipulator gestartet. Ein Abbild der Baustelle wird dann möglichst mittig über dem Drehschemel und damit im Mittelpunkt des Arbeitsbereichs erstellt und an die Positionierungshilfe übertragen.

Idealerweise weist die Positionierungshilfe einen Datenspeicher auf, in dem die Umgebungsbilddaten gespeichert sind. Die Positionierungshilfe kann ebenso eine Kommunikationsschnittstelle zu einem Datennetz aufweisen und dazu eingerichtet sein, über die Kommunikationsschnittstelle die Umgebungsbilddaten zu übertragen. Eine Möglichkeit, eine graphische Darstellung der Baustelle/Umgebung zu erhalten, ohne dass eine aufwändige Kameratechnik benötigt wird, ist die Verwendung von Satelliten- oder Luftbildern (z.B. "Google Maps" oder "Google Earth"), die über die Kommunikationsschnittstelle an die Positionierungshilfe übertragen werden, oder Kartenmaterialien eines Navigationssystems, die in dem Datenspeicher der Positionierungshilfe vorab hinterlegt werden. Da die Daten derartiger Systeme häufig aber nicht die aktuellen Gegebenheiten darstellen, wobei dies insbesondere für Bereiche gilt, die für die Allgemeinheit nicht von großer Bedeutung sind und die somit nicht regelmäßig erneut erfasst werden, ist es von Vorteil, wenn die Satelliten-/Luftbilder bzw. die Kartenmaterialien wenigstens für den Nahbereich um den Großmanipulator herum mit aktuell aufgenommenen Kamerabildern überlagert werden.

Die Positionierungshilfe ist bevorzugt so eingerichtet, dass sie die Umgebungsbilddaten entsprechend der momentanen Position und Ausrichtung des Großmanipulators so ausgibt, dass die Umgebung auf dem Bildschirm in der korrekten relativen Lage zu dem Großmanipulator auf dem Bildschirm angezeigt wird. Idealerweise weist der Großmanipulator einen mit der Positionierungshilfe verbundenen Ortungsempfänger und/oder Kompass zur Bestimmung der momentanen Position und/oder Ausrichtung des Großmanipulators auf. Hierbei kann es sich beispielsweise um einen oder mehrere GPS-Positionsempfänger handeln, der bevorzugt in Verbindung mit einem Kompass verwendet wird. Hierdurch wird die Position des Großmanipulators bei der Ausgabe der graphischen Darstellung der Umgebungsbilddaten auf dem Bildschirm mit erfasst und auch angezeigt.

Idealerweise ist die Positionierungshilfe zur Eingabe eines Zielbereichs über den Bildschirm und zur Ermittlung einer Positionierungsempfehlung in der Weise eingerichtet, dass der Zielbereich in der empfohlenen Positionierung des Großmanipulators innerhalb des Arbeitsbereiches liegt. Unter Zielbereich ist erfindungsgemäß bevorzugt die Fläche zu verstehen, die mit dem Großmanipulator erreicht werden soll. Besonders bevorzugt wird darunter die zu betonierende Fläche verstanden.

Bevorzugt ist der Bildschirm als Touchscreen ausgebildet. Der Touchscreen ist vorteilhafterweise im Bereich des Armaturenbretts des Fahrerhauses angebracht. Der Bildschirm ist idealerweise zweigeteilt, er weist eine Eingabe- und eine Anzeigeeinheit auf. Auf der einen Seite, der Eingabeseite, kann der Bediener die gewünschte Abstützkonfiguration eingeben. Auf der anderen Seite wird die Umgebung dargestellt. Die graphische Darstellung der Umgebung kann dann mit der Position des Großmanipulators und dem von diesem abgedeckten Arbeitsbereich überlagert und ausgegeben werden. Die Anordnung der Eingabe und Anzeige zueinander ist variabel. Denkbar ist auch, dass der Eingabebereich nur zum Zwecke der Eingabe temporär eingeblendet wird, ähnlich wie man es von den Benutzerschnittstellen von Smartphones kennt.

Der Benutzer kann erfindungsgemäß auch die Möglichkeit haben, einen Zielbereich, beispielsweise eine zu betonierende Fläche, selbst auszuwählen. Hierzu zeichnet er auf dem berührungsempfindlichen Bildschirm mit einem Finger oder einem Stift die Umrisse der zu betonierenden Fläche ein. Im Anschluss daran errechnet die Positionierungshilfe die optimale Positionierung. Die Berechnung erfolgt gegebenenfalls unter Berücksichtigung der erkannten oder eingegebenen örtlichen Einschränkungen. Die Positionierungshilfe kann zudem auch eine dazu passende und mögliche Abstützkonfiguration angeben. Ferner kann die Positionierungshilfe den Maschinisten mit dem Großmanipulator dann auch zum optimalen Aufstellort leiten. Vorteilhafterweise werden Informationen zur Abstützkonfiguration sowie die Wegbeschreibung zum optimalen Aufstellort auf dem Bildschirm ausgegeben.

Ferner ist Gegenstand der vorliegenden Erfindung ein Verfahren. Das erfindungsgemäße Verfahren zur programmgesteuerten Unterstützung der Positionierung eines Großmanipulators umfasst folgende Verfahrensschritten:
- Bestimmung einer Abstützkonfiguration, wobei die Abstützkonfiguration die Abstützstellungen von Stützauslegern des Großmanipulators angibt, und
- Ausgabe einer graphischen Darstellung von Umgebungsbilddaten, wobei der zu der Abstützkonfiguration korrespondierende Arbeitsbereich eines Mastarmes des Großmanipulators in der graphischen Darstellung visualisiert wird.

Durch das erfindungsgemäße Verfahren wird eine graphische Darstellung der Baustelle und der Umgebung mit dem abgedeckten Arbeitsbereich angezeigt und gegebenenfalls miteinander überlagert, noch bevor der Maschinist die Maschine endgültig aufstellt.

Hierbei ist es möglich, dass der Bediener einen gewünschten Arbeitsbereich vorgibt, woraus sich eine hierfür notwendige Abstützkonfiguration ergibt, damit der Großmanipulator in sämtlichen Stellungen des Mastarmes innerhalb des Arbeitsbereiches sicher abgestützt ist, oder der Bedienter gibt eine gewünschte bzw. am Aufstellort mögliche Abstützkonfiguration vor, woraus dann der mögliche Arbeitsbereich des Mastarmes für die Visualisierung abgeleitet wird.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
- Fig. 1: schematische Draufsicht auf einen erfindungsgemäßen Großmanipulator in einer ersten Ausgestaltungsform,
- Fig. 2: schematische Seitenansicht auf einen erfindungsgemäßen Großmanipulator gemäß Fig. 1,
- Fig. 3: schematische Seitenansicht auf einen erfindungsgemäßen Großmanipulator in einer zweiten Ausgestaltungsform,
- Fig. 4: schematische Draufsicht auf einen erfindungsgemäßen Großmanipulator in einer dritten Ausgestaltungsform,
- Fig. 5: schematische Seitenansicht auf einen erfindungsgemäßen Großmanipulator gemäß Fig. 4,
- Fig. 6: schematische Seitenansicht auf einen erfindungsgemäßen Großmanipulator in einer vierten Ausgestaltungsform,
- Fig. 7: schematische Seitenansicht auf einen erfindungsgemäßen Großmanipulator in einer fünften Ausgestaltungsform,
- Fig. 8: schematische Ansicht eines Touchscreens in einer Ausgestaltungsform gemäß der Erfindung,
- Fig. 9a: Darstellung einer graphischen Überlagerung von Umgebungsbilddaten, Arbeitsbereich und Position eines Großmanipulators in einer ersten Ausführungsform,
- Fig. 9b: Darstellung einer graphischen Überlagerung von Umgebungsbilddaten, Arbeitsbereich und Position eines Großmanipulators in einer zweiten Ausführungsform.

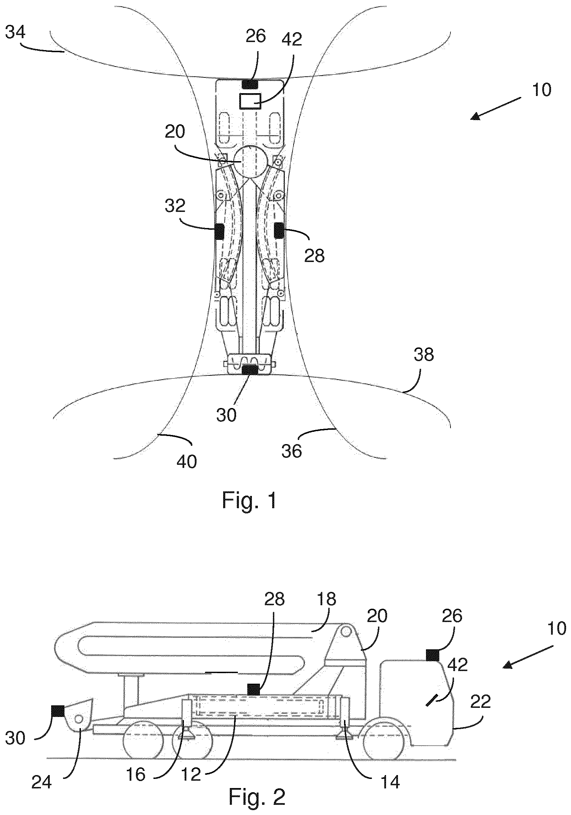

Figur 1 zeigt eine Draufsicht auf einen erfindungsgemäßen Großmanipulator 10 in einer ersten Ausgestaltungsform. Der Großmanipulator 10 umfasst ein Fahrgestell 12, zwei vordere 14 und zwei 16 hintere auf einem Untergrund über ausfahrbare Stützbeine abstützbare Stützausleger, die am Fahrgestell angeordnet sind und von einer Fahrstellung in eine Abstützstellung ganz oder teilweise ausfahrbar sind, und einen ausfaltbaren Mastarm 18, der einen um eine Hochachse drehbaren Drehschemel 20 und eine Mehrzahl von gelenkig miteinander verbundenen Mastsegmenten aufweist. Ferner weist der Großmanipulator 10 eine programmgesteuerte Positionierungshilfe auf, mit der die Ausgabe einer graphischen Darstellung von Umgebungsbilddaten auf einem Bildschirm 42 möglich ist, wobei der Arbeitsbereich des Mastarms 18 mit visualisiert wird.

Der Bediener des Großmanipulators kann beispielsweise zunächst einen gewünschten Arbeitsbereich 60 des Mastarmes 18 vorgeben, der dann eine bestimmte Abstützkonfiguration bedingt. Bei der Visualisierung wird dann der Großmanipulator 10 mit der entsprechenden Abstützkonfiguration und dem Arbeitsbereich 60 des Mastarmes visualisiert, so dass der Bediener erkennen kann, ob die notwendige Abstützkonfiguration für den ausgewählten Arbeitsbereich 60 auf der Baustelle, insbesondere bei beengten Platzverhältnissen, verwendet werden kann. Wenn der Bediener anhand der Visualisierung den optimalen Aufstellort für den Großmanipulator 10 ermittelt hat, stellt er den Großmanipulator 10 an diesem Aufstellort mit der notwendigen Abstützkonfiguration auf und eine geeignete Sensorik überprüft, ob die geforderte Abstützkonfiguration für den gewünschten Arbeitsbereich 60 mit den Stützauslegern erreicht wird. Während des Betonierbetriebes überprüft dann eine Sensorik am Mastarm ständig die Stellung des Mastarmes und begrenzt bzw. stoppt dessen Bewegung, wenn die Grenzen des ausgewählten Arbeitsbereiches 60 erreicht sind.

Bei der sensorischen Überprüfung der Abstützkonfiguration ist die tatsächliche Abstützkonfiguration (Ausschublänge / Abklappwinkel der Stützausleger 14, 16) maßgeblich. Wenn der vorgegebene Arbeitsbereich 60 bedingt, dass ein bestimmter Stützausleger z.B. nur zur Hälfte (50 %) ausgefahren werden muss, aber der Aufstellort ein weiteres Ausfahren (z.B. zwei Drittel) zulässt, wird die Freigabe für die Mastarmbewegung gegeben und u.U. auch ein größerer Arbeitsbereich 60 für den Mastarm freigegeben.

Alternativ kann der Bediener zunächst eine Abstützkonfiguration vorgeben, die sich auf der Baustelle, soweit ersichtlich, evtl. mit Unterstützung durch die Visualisierung auf dem Bildschirm, möglich ist, woraufhin die Positionierungshilfe den für die gewählte Abstützkonfiguration möglichen Arbeitsbereich berechnet und visualisiert, so dass der Bediener erkennen kann, ob mit diesem Arbeitsbereich alle Punkte einer Betonierstelle erreichbar sind,

Die graphische Darstellung der Umgebung erfolgt bevorzugt durch Kameras 26, 28, 30, 32, 44, wobei die Positionierungshilfe so eingerichtet ist, dass sie die Umgebungsbilddaten verarbeitet und auf dem Bildschirm 42 ausgibt. Vorteilhafterweise weist der Großmanipulator 10 an allen vier Seiten: vorne 26, seitlich rechts 28, hinten 30 und seitlich links 32, wenigstens eine Kamera auf. Jede der Kameras 26, 28, 30, 32 deckt einen Sichtbereich 34, 36, 38, 40 ab. Idealerweise können die Aufnahmen der Kameras 26, 28, 30, 32 rechnertechnisch überlagert werden, so dass eine 360° Rundumsicht um den Großmanipulator 10 erhalten wird.

Figur 2 zeigt eine schematische Seitenansicht auf den erfindungsgemäßen Großmanipulator 10 in der ersten Ausgestaltungsform gemäß Figur 1. Die Kameras 26, 28, 30, 32 sind am Fahrgestell 12 bzw. am Fahrerhaus 22 des Großmanipulators angeordnet. Hierdurch können die Kameras 26, 28, 30, 32 einfach mit der Positionierungshilfe kabelgebunden verbunden werden.

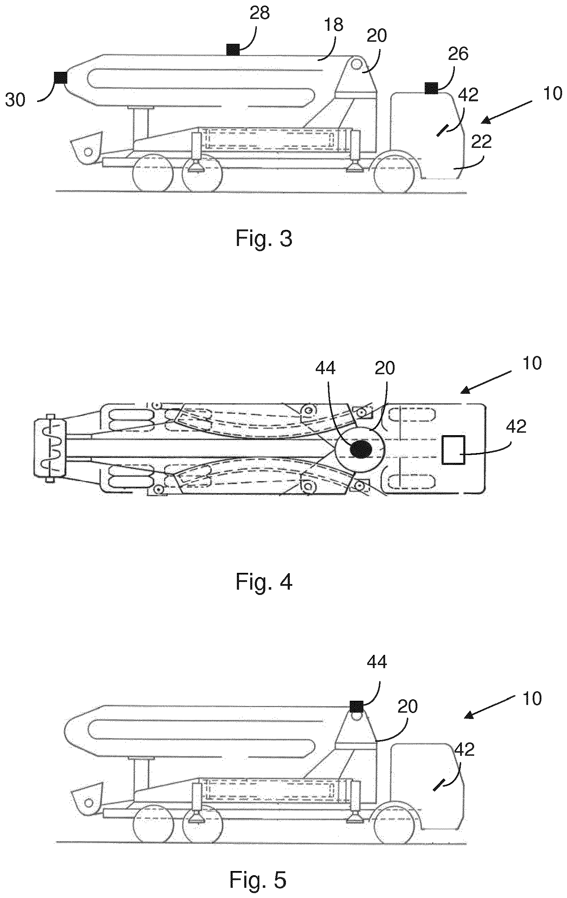

Figur 3 zeigt eine schematische Seitenansicht auf einen erfindungsgemäßen Großmanipulator 10 in einer zweiten Ausgestaltungsform. Um die Reichweite der Kameras 26, 28, 30, 32 zu verbessern, sind diese hier möglichst weit oben am Großmanipulator 10 angeordnet. Die vordere Kamera 26 ist am Fahrerhaus 22, die anderen drei Kameras 28, 30, 32 sind am Mastarm 18 angeordnet. Durch eine derartige Anordnung der Kameras 26, 28, 30, 32 erhält der Maschinist eine bessere Übersicht der Baustelle. Um auf eine aufwändige Verkabelung der Kameras 26, 28, 30, 32 verzichten zu können, sind die Kameras 26, 28, 30, 32 bevorzugt über eine Funkverbindung mit der Positionierungshilfe verbunden.

Figur 4 zeigt eine schematische Draufsicht auf einen erfindungsgemäßen Großmanipulator 10 in einer dritten Ausgestaltungsform. Die Kamera 44 ist am Drehschemel 20 angeordnet. Der Drehschemel 20 stellt den Mittelpunkt des Mastarms 18 und damit auch den Mittelpunkt des Arbeitsbereichs 60 dar. Idealerweise handelt es sich bei der Kamera 44 um eine Kamera mit 360° Rundumsicht. Vorteilhaft ist hierbei, dass eine aufwendige rechnertechnische Überlagerung von Aufnahmen verschiedener Kameras entfallen kann. Es können auch zwei Kameras am Drehschemel 20 angeordnet sein. Diese sind dann bevorzugt seitlich, an der rechten und linken Seite des Drehschemels 20, angeordnet.

Figur 5 zeigt eine schematische Seitenansicht auf einen erfindungsgemäßen Großmanipulator 10 in der dritten Ausgestaltungsform gemäß Figur 4. Die 360°-Kamera 44 ist auf dem Drehschemel 20 angeordnet.

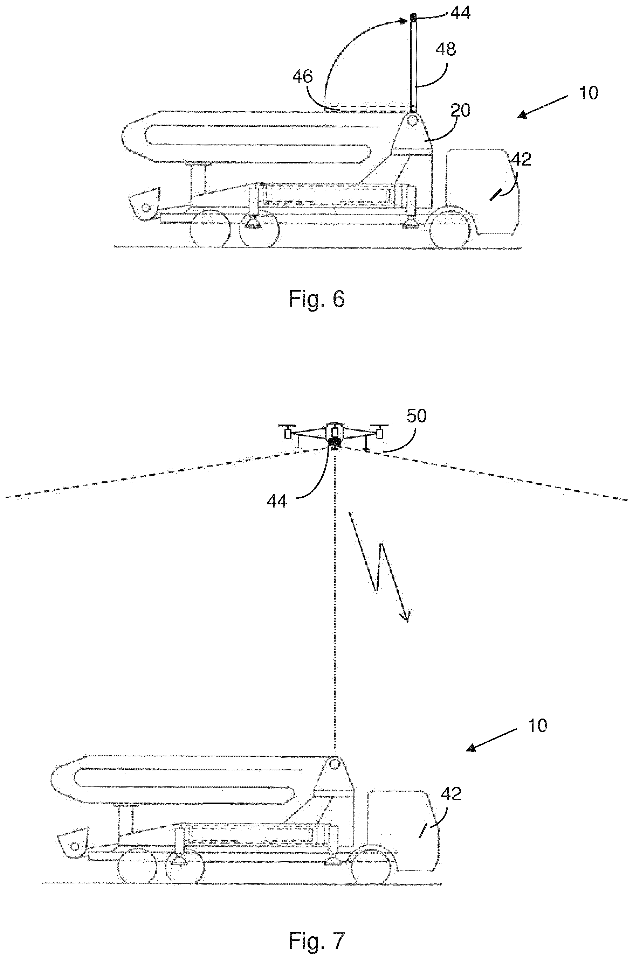

Figur 6 zeigt eine schematische Seitenansicht auf einen erfindungsgemäßen Großmanipulator 10 in einer vierten Ausgestaltungsform. Eine Kamera 44 ist an einem nach oben ausschwenkbaren Kameraausleger 46, 48, der sich am Drehschemel 20 befindet, angeordnet. Der Kameraausleger ist von einer zusammengeklappten Stellung 46, in der sich die Kamera 44 in Höhe des Drehschemels 20 befindet, in eine ausgeklappte Stellung 48 überführbar. In der ausgeklappten Stellung 48 ragt die Kamera 44 nach oben über den Großmanipulator 10 hinaus. Je nach Gegebenheit kann der Kameraausleger 48 entsprechend weit nach oben ausgeschwenkt werden. Anstelle des ausschwenkbaren Kameraauslegers 46, 48, wäre auch ein nach oben in eine ausreichende Höhe teleskopierbarer Träger für die Kamera 44 denkbar.

Figur 7 zeigt eine schematische Seitenansicht auf einen erfindungsgemäßen Großmanipulator 10 in einer fünften Ausgestaltungsform. Die Kamera 44 ist an einem unbemannten Luftfahrzeug 50, beispielsweise einer Drohne, angeordnet, das/die von dem Bediener steuerbar ist. Die Kamera 44 kommuniziert idealerweise mit der Positionierungshilfe zur Übertragung der Umgebungsbilddaten drahtlos. Die Kamera 44 kann die aufgenommenen Bilddaten über Funk an die Positionierungshilfe übertragen. Die Kamera 44 ist bevorzugt an der Unterseite des Luftfahrzeugs 50 angeordnet. Das Luftfahrzeug 50 wird von dem Großmanipulator 10 oder neben dem Großmanipulator 10 gestartet. Ein Abbild der Baustelle wird dann möglichst mittig über dem Drehschemel 20 erstellt und an die Positionierungshilfe übertragen.

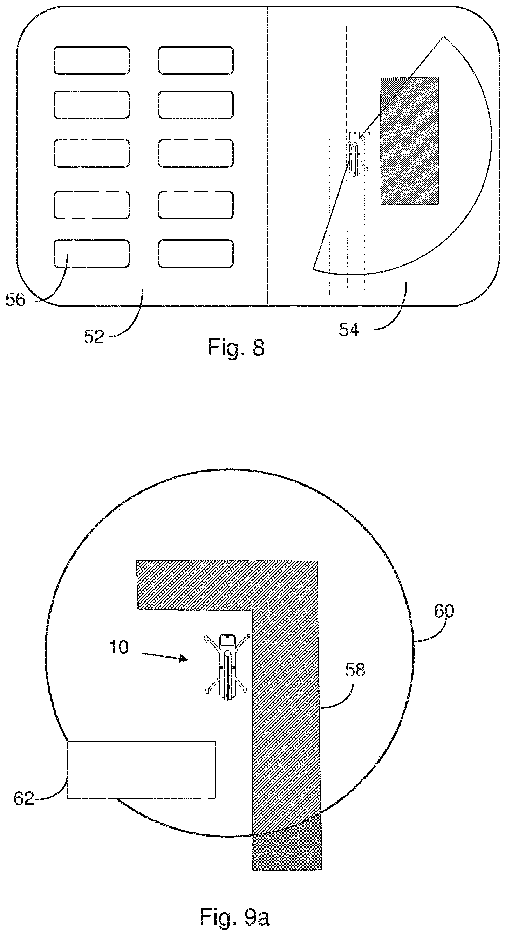

Figur 8 zeigt eine schematische Ansicht eines Bildschirms/Touchscreens 42 der erfindungsgemäßen Positionierungshilfe in einer Ausgestaltungsform. Der Bildschirm 42 ist zweigeteilt. Auf der rechten Seite ist die Anzeige 54 und auf der linken Seite die Eingabe 56 angeordnet. Die Eingabe 56 kann eine Mehrzahl von Tasten 56 aufweisen, über die der Maschinist verschiedene vordefinierte Abstützkonfigurationen auswählen kann. Alternativ kann der Maschinist auch verschiedene, evtl. vordefinierte Arbeitsbereiche 60 des Mastarmes auswählen, die jeweils unterschiedliche Abstützkonfigurationen bedingen, die dann auf dem Bildschirm dargestellt werden. Die Anzeige 54 zeigt eine graphische Darstellung von Umgebungsbilddaten, die bevorzugt mit Kameras wie oben beschrieben aufgenommen werden. Alternativ oder zusätzlich können gespeicherte oder aus dem Internet geladene Satelliten- oder Luftbilder dargestellt werden. Überlagert wird diese Abbildung mit der Position des Großmanipulators 10 mit ausgewählter Abstützkonfiguration bzw. ausgewähltem Arbeitsbereich 60 des Mastarms 18, basierend auf der auf der linken Seite ausgewählten Abstützkonfiguration bzw. dem ausgewählten/vorgegebenen Arbeitsbereich.

Der Arbeitsbereich des Großmanipulators bei verschiedenen Abstützkonfigurationen kann prinzipiell auf zwei verschieden Arten ermittelt werden. In dem o.g. Beispiel mit der Auswahl einer Abstützkonfiguration wird der Arbeitsbereich für die möglichen, auswählbaren Abstützkonfigurationen in einem Speicher bzw. einer Tabelle abgelegt und bei Auswahl einer Abstützkonfiguration wird der dazugehörige Arbeitsbereich aus der Tabelle ausgelesen und auf dem Touchscreen angezeigt. In diesem Fall kann der Maschinist nur zwischen vordefinierten Abstützkonfigurationen auswählen, bei der einzelne Stützen nur voll oder überhaupt nicht ausgefahren werden, oder bspw. nur zu 50% ausgefahren werden.

Wenn der Maschinist die Möglichkeit haben soll, die Stützen individuell auch in allen möglichen Zwischenpositionen auszufahren, ist es notwendig eine Schwerpunktberechnung durchzuführen, so dass bei der Ermittlung des Arbeitsbereiches derjenige mit der Spitze des Mastarmes erreichbare Bereich berechnet wird, in dem sich der Schwerpunkt des Großmanipulators innerhalb eines durch die Positionen der Stützbeine in der eingegebenen Abstützkonfiguration definierten Stützvierecks befindet.

Bei beiden Varianten wird dem Maschinisten ausschließlich der Arbeitsbereich des Großmanipulators bzw. des Mastarms angezeigt, in dem die Standfestigkeit des Großmanipulators sichergestellt ist und die Gefahr eines Umkippens nicht besteht.

Figur 9a zeigt eine Darstellung einer graphischen Überlagerung von Umgebungsbilddaten, dem Arbeitsbereich 60 des Mastarms 18 und der Position des Großmanipulators 10 in einer ersten Ausführungsform wie sie durch die Anzeige 54 ausgegeben werden kann. Mit dem dargestellten Großmanipulator 10 soll eine L-förmige Fläche 58 betoniert werden. In unmittelbarer Nähe der L-förmigen Fläche 58 befindet sich ein Hindernis 62. Bei der Vollabstützung des Großmanipulators 10 unter Umgehung des Hindernisses, wie sie in Figur 9a gewählt wurde, ist nur ein Teilbereich der Betonierfläche 58 zu erreichen. Würde der Maschinist den Großmanipulator 10 an dieser Stelle aufstellen, würde eine Neupositionierung des Großmanipulators 10 unumgänglich sein oder Beton müsste anderweitig an die nicht zu erreichenden Stellen verbracht werden.

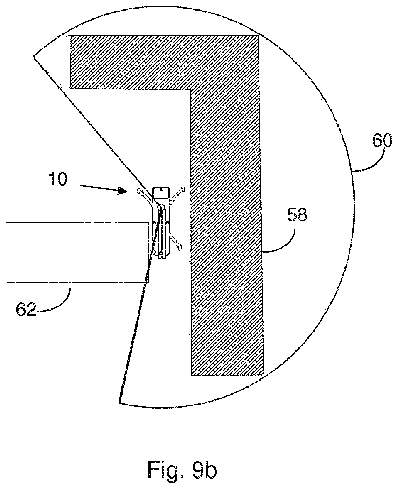

Figur 9b zeigt ebenfalls eine Darstellung einer graphischen Überlagerung von Umgebungsbilddaten, dem Arbeitsbereich 60 des Mastarms 18 und der Position des Großmanipulators 10. Wie in Figur 9a, soll auch hier eine L-förmige Fläche 58 betoniert werden. Der Großmanipulator 10 befindet sich zwischen dem Hindernis 62 und der zu betonierenden L-förmigen Fläche 58. Indem durch das Hindernis nur eine Teilabstützung möglich ist und nur die rechten Stützausleger ausgefahren werden können, ist der Arbeitsbereich 60 beschränkt. Der Mastarm 18 kann nicht um 360° verfahren werden, ohne dass ein Umkippen des Großmanipulators 10 droht. Eine vollständige Abdeckung der Betonierfläche 58 durch den Mastarm 18 ist aber dennoch möglich. Der Maschinist würde somit an dieser Stelle dann die Stützausleger 14, 16 in die aus dem Arbeitsbereich 60 abgeleitete bzw. ausgewählte Abstützkonfiguration bringen. Danach könnte mit dem Austragen des Betons begonnen werden.

Die erfindungsgemäß vorgesehene programmgesteuerte Positionierungshilfe kann in einer praktischen Ausgestaltung als in dem Großmanipulator verbauter Computer an sich üblicher Bauart (mit Prozessor, Arbeitsspeicher, Datenbus usw.) mit geeigneten Ein- und Ausgabeschnittstellen zu Bildschirm, Sensoren, Kameras, Eingabetasten oder dergleichen realisiert sein. Seine erfindungsgemäße Einrichtung erhält die Positionierungshilfe durch entsprechende Software. Die Software kann im Arbeitsspeicher oder einem nichtflüchtigen Speicher der Positionierungshilfe gespeichert sein.

### Bezuaszeichenliste

- 10: Großmanipulator
- 12: Fahrgestell
- 14: vorderer Stützausleger
- 16: hinterer Stützausleger
- 18: Mastarm
- 20: Drehschemel
- 22: Fahrerhaus
- 24: Dickstoffpumpe
- 26: vordere Kamera
- 28: seitliche rechte Kamera
- 30: hintere Kamera
- 32: seitliche linke Kamera
- 34: Sichtbereich vordere Kamera
- 36: Sichtbereich rechte Kamera
- 38: Sichtbereich hintere Kamera
- 40: Sichtbereich linke Kamera
- 42: Bildschirm/Touchscreen
- 44: 360° Kamera
- 46: Kameraausleger (zusammengeklappt)
- 48: Kameraausleger (ausgeklappt)
- 50: Drohne
- 52: Eingabe
- 54: Anzeige
- 56: Tasten
- 58: Zielbereich/zu betonierende Fläche
- 60: Arbeitsbereich
- 62: Hindernis

## Patentansprüche

1. Fahrbarer Großmanipulator (10) mit
- einem Fahrgestell (12),
- zwei vorderen (14) und zwei hinteren (16) auf einem Untergrund über ausfahrbare Stützbeine abstützbaren Stützauslegern, die jeweils am Fahrgestell (12) angeordnet und von einer Fahrstellung in eine Abstützstellung ganz oder teilweise ausfahrbar sind,
- einem ausfaltbaren Mastarm (18), der einen am Fahrgestell um eine Hochachse drehbar angeordneten Drehschemel (20) und eine Mehrzahl von gelenkig miteinander verbundenen Mastsegmenten aufweist, wobei der Arbeitsbereich (60) des Mastarms (18) von der Abstützkonfiguration, d.h. von den Abstützstellungen der Stützausleger abhängt,
**gekennzeichnet durch** eine programmgesteuerte Positionierungshilfe, die zur Ausgabe einer graphischen Darstellung von Umgebungsbilddaten auf einem Bildschirm (42) eingerichtet ist, wobei der Arbeitsbereich (60) des Mastarmes (18) in der graphischen Darstellung visualisiert wird.

2. Großmanipulator (10) nach Anspruch 1, **dadurch gekennzeichnet, dass** die Positionierungshilfe weiter in der Weise eingerichtet ist, dass zur Visualisierung des Arbeitsbereiches (60) eine graphische Darstellung des Arbeitsbereiches (60) lagerichtig mit der graphischen Darstellung der Umgebung des fahrbaren Großmanipulators (10) überlagert wird.

3. Großmanipulator (10) nach einem der Ansprüche 1 bis 2, **gekennzeichnet durch** wenigstens eine Kamera (26, 28, 30, 32), die die Umgebungsbilddaten aufnimmt, wobei die Positionierungshilfe eingerichtet ist, die Umgebungsbilddaten zu verarbeiten und auf dem Bildschirm (42) auszugeben.

4. Großmanipulator (10) nach Anspruch 3, **dadurch gekennzeichnet, dass** die Kamera (44) am Drehschemel (20) angeordnet ist.

5. Großmanipulator (10) nach Anspruch 3 oder 4, **dadurch gekennzeichnet, dass** je eine Kamera vorne (26), hinten (30), seitlich links (32) und seitlich rechts (28) am Großmanipulator (10) angeordnet ist.

6. Großmanipulator nach einem der Ansprüche 3 bis 5, **dadurch gekennzeichnet, dass** wenigstens eine Kamera am Mastarm angeordnet ist.

7. Großmanipulator (10) nach einem der Ansprüche 3 bis 6, **dadurch gekennzeichnet, dass** wenigstens eine Kamera (44) an einem nach oben ausfahrbaren oder ausschwenkbaren Kameraausleger (46, 48) angeordnet ist.

8. Großmanipulator (10) nach einem der Ansprüche 3 bis 7, **dadurch gekennzeichnet, dass** die Kamera (44) an einem unbemannten Luftfahrzeug (50) angeordnet ist, das von dem Bediener steuerbar ist, wobei die Kamera (44) mit der Positionierungshilfe zur Übertragung der Umgebungsbilddaten drahtlos kommuniziert.

9. Großmanipulator (10) nach einem der Ansprüche 1 bis 8, **dadurch gekennzeichnet, dass** die Positionierungshilfe einen Datenspeicher aufweist, in dem die Umgebungsbilddaten gespeichert sind.

10. Großmanipulator (10) nach einem der Ansprüche 1 bis 9, **dadurch gekennzeichnet, dass** die Positionierungshilfe eine Kommunikationsschnittstelle zu einem Datennetz aufweist und eingerichtet ist, über die Kommunikationsschnittstelle die Umgebungsbilddaten zu übertragen.

11. Großmanipulator (10) nach einem der Ansprüche 1 bis 10, **dadurch gekennzeichnet, dass** die Positionierungshilfe eingerichtet ist, die Umgebungsbilddaten entsprechend der momentanen Position und Ausrichtung des Großmanipulators (10) auszugeben, so dass die Umgebung auf dem Bildschirm (42) in der korrekten relativen Lage zu dem Großmanipulator (10) auf dem Bildschirm (42) angezeigt wird.

12. Großmanipulator (10) nach Anspruch 11, **dadurch gekennzeichnet, dass** der Großmanipulator (10) einen mit der Positionierungshilfe verbundenen Ortungsempfänger und/oder Kompass zur Bestimmung der momentanen Position und/oder Ausrichtung des Großmanipulators (10) aufweist.

13. Großmanipulator (10) nach einem der Ansprüche 1 bis 12, **dadurch gekennzeichnet, dass** die Positionierungshilfe zur Eingabe eines Zielbereichs mittels des Bildschirms (42) und zur Ermittlung einer Positionierungsempfehlung eingerichtet ist, in der Weise, dass der Zielbereich (58) in der empfohlenen Positionierung des Großmanipulators innerhalb des Arbeitsbereiches (60) liegt.

14. Großmanipulator (10) nach einem der Ansprüche 1 bis 13, **dadurch gekennzeichnet, dass** der Bildschirm (42) als Touchscreen zur Eingabe des Zielbereiches ausgebildet ist.

15. Verfahren zur programmgesteuerten Unterstützung der Positionierung und/oder Abstützung eines Großmanipulators (10), mit den Verfahrensschritten:
- Bestimmung einer Abstützkonfiguration, wobei die Abstützkonfiguration Abstützstellungen von Stützauslegern (14, 16) des Großmanipulators (10) angibt, und
- Ausgabe einer graphischen Darstellung von Umgebungsbilddaten, wobei der zu der Abstützkonfiguration korrespondierende Arbeitsbereich (60) eines Mastarmes (18) des Großmanipulators (10) in der graphischen Darstellung visualisiert wird.

16. Verfahren nach Anspruch 15, wobei die Bestimmung der Abstützkonfiguration die folgenden Verfahrensschritte umfasst:
- Vorgabe eines gewünschten Arbeitsbereiches (60) durch einen Bediener des Großmanipulators, und
- Ableitung der notwendigen Abstützstellungen der Stützausleger (14, 16) aus der Vorgabe des Arbeitsbereiches (60).

17. Verfahren nach Anspruch 15, wobei die Bestimmung der Abstützkonfiguration durch Vorgabe derselben durch den Bediener des Großmanipulators erfolgt, wobei der Arbeitsbereich (60) aus der vorgegebenen Abstützkonfiguration abgeleitet wird.

## Claims

1. Mobile large manipulator (10) with
- a chassis (12),
- two front (14) and two rear (16) support outriggers, which can be supported on a base via extendable support legs and are each arranged on the chassis (12) and can be extended fully or partially from a driving position to a support position,
- an unfolding mast arm (18), which has a turntable (20) arranged on the chassis rotatably about a vertical axis and a plurality of mast segments connected articulately to one another, wherein the operating area (60) of the mast arm (18) depends on the support configuration, i.e. on the support positions of the support outriggers,
**characterised by**
a program-controlled positioning aid, which is configured to output a graphical representation of environmental image data on a screen (42), wherein the operating area (60) of the mast arm (18) is visualised in the graphical representation.

2. Large manipulator (10) according to claim 1, **characterised in that** the positioning aid is further adapted in the manner that to visualise the operating area (60), a graphical representation of the operating area (60) is overlaid correctly positioned by the graphical representation of the environment of the mobile large manipulator (10).

3. Large manipulator (10) according to one of claims 1 to 2, **characterised by** at least one camera (26, 28, 30, 32), which records the environmental image data, wherein the positioning aid is adapted to process the environmental image data and output it on the screen (42).

4. Large manipulator (10) according to claim 3, **characterised in that** the camera (44) is arranged on the turntable (20).

5. Large manipulator (10) according to claim 3 or 4, **characterised in that** a camera is arranged respectively at the front (26), rear (30), on the left-hand side (32) and on the right-hand side (28) on the large manipulator (10).

6. Large manipulator (10) according to any one of claims 3 to 5, **characterised in that** at least one camera is arranged on the mast arm.

7. Large manipulator (10) according to any one of claims 3 to 6, **characterised in that** at least one camera (44) is arranged on a camera boom (46, 48) extendable or pivotable upwards.

8. Large manipulator (10) according to any one of claims 3 to 7, **characterised in that** the camera (44) is arranged on an unmanned aircraft (50), which can be controlled by the operator, wherein the camera (44) communicates wirelessly with the positioning aid to transmit the environmental image data.

9. Large manipulator (10) according to any one of claims 1 to 8, **characterised in that** the positioning aid comprises a memory in which the environmental image data is stored.

10. Large manipulator (10) according to any one of claims 1 to 9, **characterised in that** the positioning aid comprises a communications interface with a data network and is adapted to transmit the environmental image data via the communications interface.

11. Large manipulator (10) according to any one of claims 1 to 10, **characterised in that** the positioning aid is adapted to output the environmental image data corresponding to the momentary position and orientation of the large manipulator (10), so that the environment is displayed on the screen (42) in the correct relative position to the large manipulator (10) on the screen (42).

12. Large manipulator (10) according to claim 11, **characterised in that** the large manipulator (10) has a locating receiver connected to the positioning aid and/or compass for determining the momentary position and/or orientation of the large manipulator (10).

13. Large manipulator (10) according to any one of claims 1 to 12, **characterised in that** the positioning aid is configured for the input of a target area via the screen (42) and for the determination of a positioning recommendation in the manner that the target area (58) lies in the recommended positioning of the large manipulator within the operating area (60).

14. Large manipulator (10) according to any one of claims 1 to 13, **characterised in that** the screen (42) is designed as a touchscreen for the input of the target area.

15. Method for the program-controlled support of the positioning and/or support of a large manipulator (10) with the method steps of:
- determination of a support configuration, wherein the support configuration indicates support positions of support outriggers (14, 16) of the large manipulator (10), and
- output of a graphical representation of environmental image data, wherein the operating area (60) of a mast arm (18) of the large manipulator (10) corresponding to the support configuration is visualised in the graphical representation.

16. Method according to claim 15, wherein the determination of the support configuration comprises the following method steps:
- specification of a desired operating area (60) by an operator of the large manipulator, and
- derivation of the necessary support positions of the support outriggers (14, 16) from the specification of the operating area (60).

17. Method according to claim 15, wherein the determination of the support configuration takes place by specification of the same by the operator of the large manipulator, wherein the operating area (60) is derived from the specified support configuration.

## Revendications

1. Manipulateur de grande taille (10) mobile avec
- un châssis (12),
- deux flèches d'appui avant (14) et deux flèches d'appui arrière (16) pouvant prendre appui sur un support par l'intermédiaire de jambes d'appui pouvant être déployées, qui sont disposées respectivement sur le châssis (12) et peuvent être déployées en totalité ou en partie depuis une position de déplacement dans une position de soutien,
- un bras de mât (18) pouvant être déplié, qui présente un tambour rotatif (20) disposé de manière à pouvoir tourner autour d'un axe vertical sur le châssis et une multitude de segments de mât reliés les uns aux autres de manière articulée, dans lequel la zone de travail (60) du bras de mât (18) dépend de la configuration de soutien, en d'autres termes des positions de soutien des flèches d'appui,
**caractérisé par**
un système d'aide au positionnement commandé par programme, qui est configuré pour émettre une représentation graphique de données d'image d'environnement sur un écran (42), dans lequel la zone de travail (60) du bras de mât (18) est visualisée sur la représentation graphique.

2. Manipulateur de grande taille (10) selon la revendication 1, **caractérisé en ce que** le système d'aide au positionnement est par ailleurs configuré de telle manière que pour visualiser la zone de travail (60), une représentation graphique de la zone de travail (60) est superposée en position correcte par la représentation graphique de l'environnement du manipulateur de grande taille (10) mobile.

3. Manipulateur de grande taille (10) selon l'une quelconque des revendications 1 à 2, **caractérisé par** au moins une caméra (26, 28, 30, 32), qui enregistre les données d'image d'environnement, dans lequel le système d'aide au positionnement est configurer pour traiter les données d'image d'environnement et les sortir sur l'écran (42).

4. Manipulateur de grande taille (10) selon la revendication 3, **caractérisé en ce que** la caméra (44) est disposée sur le tambour rotatif (20).

5. Manipulateur de grande taille (10) selon la revendication 3 ou 4, **caractérisé en ce que** respectivement une caméra (26) est disposée à l'avant (26), à l'arrière (30), à gauche latéralement (32) et à droite latéralement (28) sur le manipulateur de grande taille (10).

6. Manipulateur de grande taille selon l'une quelconque des revendications 3 à 5, **caractérisé en ce qu'**au moins une caméra est disposée sur le bras de mât.

7. Manipulateur de grande taille (10) selon l'une quelconque des revendications 3 à 6, **caractérisé en ce qu'**au moins une caméra (44) est disposée sur une flèche de caméra (46, 48) pouvant être déployée ou pouvant être sortie par pivotement vers le haut.

8. Manipulateur de grande taille (10) selon l'une quelconque des revendications 3 à 7, **caractérisé en ce que** la caméra (44) est disposée sur un aéronef (50) sans équipage, qui peut être commandé par l'utilisateur, dans lequel la caméra (44) communique sans fil avec le système d'aide au positionnement pour la transmission des données d'image d'environnement.

9. Manipulateur de grande taille (10) selon l'une quelconque des revendications 1 à 8, **caractérisé en ce que** le système d'aide au positionnement présente une mémoire de données, dans laquelle les données d'image d'environnement sont mémorisées.

10. Manipulateur de grande taille (10) selon l'une quelconque des revendications 1 à 9, **caractérisé en ce que** le système d'aide au positionnement présente une interface de communication avec un réseau de données et est configuré pour transmettre les données d'image d'environnement par l'intermédiaire de l'interface de communication.

11. Manipulateur de grande taille (10) selon l'une quelconque des revendications 1 à 10, **caractérisé en ce que** le système d'aide au positionnement est configuré pour sortir les données d'image d'environnement conformément à la position et à l'orientation instantanées du manipulateur de grande taille (10) de sorte que l'environnement est indiqué sur l'écran (42) dans la position relative correcte par rapport au manipulateur de grande taille (10) sur l'écran (42).

12. Manipulateur de grande taille (10) selon la revendication 11, **caractérisé en ce que** le manipulateur de grande taille (10) présente un récepteur de localisation et/ou une boussole relié/reliée au système d'aide au positionnement pour définir la position et/ou l'orientation instantanées du manipulateur de grande taille (10).

13. Manipulateur de grande taille (10) selon l'une quelconque des revendications 1 à 12, **caractérisé en ce que** le système d'aide au positionnement est configuré pour entrer une zone cible au moyen de l'écran (42) et pour déterminer une recommandation de positionnement de telle manière que la zone cible (58) se situe dans le positionnement recommandé du manipulateur de grande taille à l'intérieur de la zone de travail (60).

14. Manipulateur de grande taille (10) selon l'une quelconque des revendications 1 à 13, **caractérisé en ce que** l'écran (42) est réalisé en tant qu'écran tactile pour entrer la zone cible.

15. Procédé pour soutenir de manière commandée par programme le positionnement et/ou le soutien d'un manipulateur de grande taille (10), avec les étapes de procédé :
- de définition d'une configuration de soutien, dans lequel la configuration de soutien indique des positions de soutien de flèches d'appui (14, 16) du manipulateur de grande taille (10), et
- de sortie d'une représentation graphique de données d'image d'environnement, dans lequel la zone de travail (60), correspondant à la configuration de soutien, d'un bras de mât (18) du manipulateur de grande taille (10) est visualisée sur la représentation graphique.

16. Procédé selon la revendication 15, dans lequel la définition de la configuration de soutien comprend les étapes de procédé suivantes :
- la spécification d'une zone de travail (60) souhaitée par un opérateur du manipulateur de grande taille, et
- la conclusion des positions de soutien nécessaires des flèches d'appui (14, 16) à partir de la spécification de la zone de travail (60).

17. Procédé selon la revendication 15, dans lequel la définition de la configuration de soutien est effectuée par spécification de celle-ci par l'opérateur du manipulateur de grande taille, dans lequel la zone de travail (60) est conclue à partir de la configuration de soutien spécifiée.
